(19) Europäisches Patentamt
European Patent Office
Office européen des brevets

(11) **EP 2 267 616 A1**

(12) # EUROPEAN PATENT APPLICATION

(43) Date of publication:
**29.12.2010 Bulletin 2010/52**

(51) Int Cl.:
***G06F 17/30*** *(2006.01)*

(21) Application number: **10166456.3**

(22) Date of filing: **18.06.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(30) Priority: **24.06.2009 EP 09008261** | (71) Applicant: **Siemens Aktiengesellschaft**<br>**80333 München (DE)**<br><br>(72) Inventors:<br>• **Gerdes, Christoph**<br>  **81667, München (DE)**<br>• **Merk, Stephan**<br>  **80804, München (DE)** |

(54) **Mapping module and method for mapping data operations to a cloud storage provider**

(57)  The invention relates to a mapping module (2) and a method for mapping data store and/ore retrieval operations of at least one application (4-1; 4-2; 4-3; 4-M) to at least one decentralized cloud storage provider (3-1; 3-2; 3-N), comprising means for declaring storage requirements for data handled by the application at the mapping module (2), means for registering different storage providers (3-1; 3-2; 3-N) using descriptions of storage features of provided storage clouds and means for selecting a service provider (3-1; 3-2; 3-N) based on the storage requirements and on the descriptions of storage features.

The module and method reduce efforts to implement storage mechanisms not provided by a particular provider and further ensure interoperability between different providers.

**Description**

This invention relates to a mapping module and a method for mapping data store and/ore retrieval operations of an application to a cloud storage provider.

Cloud Computing, in general, and cloud storage in particular will change how future applications are developed. Today, many applications use standard database systems to manage the state of the application or service. Relational Database Management Systems (RDBMS) are nowadays standard. RDBMS are able to provide certain guarantees for the storage of data, e.g. atomicity or persistence.

De-centralized Cloud Storage Systems have become an alternative to local storage of data. Such cloud storage systems are provided by providers like Amazon S3, Microsoft SQl Service etc. While RDBMS are able to provide certain guarantees for the storage of data, Cloud Storage Systems provide only partial guarantees. In addition, the provided guarantees vary between different cloud storage system providers.

Turning now to the applications that make use of storage capabilities of RDBMS, it is a fact that a majority of these applications are not dependent on the full feature set which RDBMS is able to offer. However, a couple of applications depend on particular features of RDBMS. One example is a consistency model for the storage of data.

When moving stored data for such an application from RDBMS towards de-centralized systems ("Cloud Storage Systems" or sometimes referred to as "Internet Harddrives") it is essential for the storage of the data to rely on the feature set and the consistency model of RDMBS in the storage cloud environment as well.

The concept of Cloud Storage has recently become popular. Many applications are proprietary and tailored to a particular cloud provider. Moving from one provider to another while keeping to an application is generally not supported. As the applications for interfacing a cloud storage provider are commonly proprietary, the applications have to be designed to a specific cloud storage provider. In parallel, a particular cloud storage provider does not offer features which are provided by another cloud storage provider.

Under these circumstances a software designer faces two major problems. On the one hand, the software designer has to implement additional logic into the application to interface with a particular cloud storage provider and, on the other hand, the software designer has to (re-)implement this additional logic for every application.

Another problem is posed by the fact that applications designed for a particular cloud storage provider and/or for a particular data class are not able to be migrated to another cloud storage provider and/or to another data class. At present, no common standards exist that would allow the migration of a service or data from one cloud provider to another.

Up to now there are no general tools or methods available to assure storage requirements not specified to a certain cloud storage provider. Expenses to migrate an application from one cloud storage provider to another are considerably high. The option to migrate to alternative cloud storage providers is therefore limited.

It is an object of the present invention to provide an arrangement which at least partially solves the above detailed problems in the art.

This object is achieved by a method in accordance with the claims.

The inventive mapping module for mapping data store and/ore retrieval operations of at least one application to at least one decentralized cloud storage provider comprises means for declaring storage requirements for data handled by the application at the mapping module, means for registering different storage providers using descriptions of storage features of provided storage clouds and means for selecting a service provider based on the storage requirements and on the descriptions of storage features.

Accordingly, the inventive method for mapping data store and/ore retrieval operations of at least one application to at least one decentralized cloud storage provider comprises the steps of registering different storage providers using descriptions of storage features of provided storage clouds, declaring storage requirements for data handled by the application at the mapping module and selecting a service provider based on the storage requirements and on the descriptions of storage features.

The universal mapping module solves the problem of varying storage guarantees between different cloud storage providers by enabling an application to declare the storage requirements of the application at the mapping module. To store or retrieve a data item, the mapping module maps store and retrieval operations to respective cloud storage providers thereby considering the storage specifications previously declared by the application.

The inventive module and method reduce efforts to implement storage mechanisms not provided by a particular cloud storage provider. It further ensures the interoperability between different providers.

In a preferred embodiment the mapping module comprises means for registering different data classes for the data handled by the application at the mapping module. Thus, different storage requirements can be declared for the different data classes.

In a further preferred embodiment, the mapping module comprises means for assigning a data class to a data item to be stored or to be retrieved in or from a storage cloud and means for selecting a storage provider dependent on the data class. Thus, it is possible to select different storage providers for data items assigned to different data classes.

Further features and advantages of the invention will be found in and perceived from the ensuing detailed description of an embodiment of the invention, which is described in the following based on the figure.

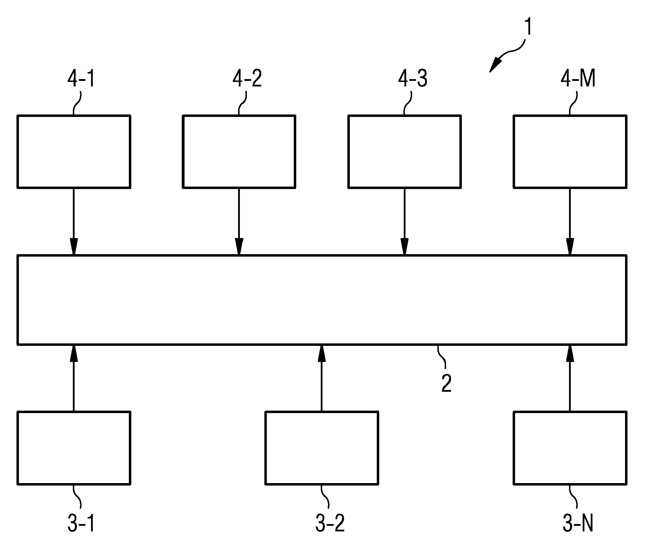

Fig. 1 shows a schematic block diagram of a cloud storage system with a mapping module according to the invention.

As illustrated in figure 1, a cloud storage system 1 comprises a mapping module 2 with interfaces to several decentralized cloud storage providers 3-1 to 3-N providing cloud storages with typically different features. Furthermore the mapping module 2 comprises interfaces to be connected to several applications 4-1 to 4-M in order to register in the mapping module and/or to store and/or to retrieve data in or from at least one of the cloud storages 3-1 to 3-N via the mapping module 2.

As an example, it is supposed that data handled by an application, e.g. application 4-1, can be categorized in two data classes. In a first data class, data will be frequently accessed by a large number of users who only read data. Storage requirements of this first data class are registered at the mapping module by providing the following declarative class description:

```
REQUIRES CONSISTENCY=IMMUTABLE ON
(SELECT * FROM ITEMS WHERE <item member of class 1>)
```

The expression above instructs the mapping module 2 that all data items in class 1 are immutable. The data items therefore may be stored in a cloud storage that does not synchronize data accesses.

In a second data class, data will be will be infrequently accessed by few users. However, as users can read and write the data, data stored in this class requires that all accesses are synchronized. The storage requirements of this second data class will be registered at the mapping module 2 by providing the following declarative class description:

```
REQUIRES CONSISTENCY=ATOMIC, REPLICATON=OFF ON
(SELECT * FROM ITEMS WHERE <item member of class 2>)
```

Whereas, according to the instruction for the first data class above, data items may be stored in a cloud storage that does not synchronize data accesses, the expression for the current second data class instructs that data items in this second class 2 require atomic access and may only be stored in a cloud storage that guarantees atomic access.

All cloud storage providers are registered at the mapping module using a description of their storage capabilities and additional information, e.g. pricing model. To store a data item, it is passed from the application 4-1 to the mapping module 2 which applies the class description to categorize the data.

In a second step the mapping module 2 determines the most appropriate provider in accordance with the registered information and the storage specifications as optimization criteria. Having identified a particular storage provider and thus a particular cloud storage, e.g. cloud storage 3-1, for the current data item, the data item is stored.

In order to access previously stored data the mapping process described above is applied vice-versa. The application 4-1 provides a query for a particular data item which is resolved by the mapping module 2 and then queried by the mapping module 2 at the storage provider of the cloud storage 3-1 in which the data is stored. Optionally a read operation of the provider is invoked to retrieve the item.

**Claims**

1. A mapping module (2) for mapping data store and/ore retrieval operations of at least one application (4-1; 4-2; 4-3; 4-M) to at least one decentralized cloud storage provider (3-1; 3-2; 3-N),
   **characterized by**

   - means for declaring storage requirements for data handled by the application at the mapping module (2),
   - means for registering different storage providers (3-1; 3-2; 3-N) using descriptions of storage features of provided storage clouds and
   - means for selecting a service provider (3-1; 3-2; 3-N) based on the storage requirements and on the descriptions of storage features.

2. A mapping module according to claim 1, **characterized by** further means for registering different data classes for the data handled by the application (4-1; 4-2; 4-3; 4-M) at the mapping module (2).

3. A mapping module according to claim 2, **characterized by**

   - further means for assigning a data class to a data item to be stored or to be retrieved in or from a storage cloud and
   - further means for selecting a storage provider (3-1; 3-2; 3-N) dependent on the assigned data class.

4. Method for mapping data store and/ore retrieval operations of at least one application (4-1; 4-2; 4-3; 4-M) to at least one decentralized cloud storage provider (3-1; 3-2; 3-N), **characterized by** the following steps:

   - registering different storage providers (3-1; 3-2; 3-N) using descriptions of storage features of provided storage clouds
   - declaring storage requirements for data handled by the application at the mapping module (2) and
   - selecting a service provider (3-1; 3-2; 3-N) based on the storage requirements and on the descriptions of storage features.

5. Method according to claim 4, **characterized by** a further step of registering different data classes for the data handled by the application (4-1; 4-2; 4-3; 4-M) at the mapping module (2).

6. Method according to claim 5, wherein a data class is assigned to a data item to be stored or to be retrieved in or from a storage cloud and a storage provider (3-1; 3-2; 3-N) is selected dependent on the assigned data class.

1

4-1        4-2        4-3        4-M

2

3-1        3-2        3-N

Europäisches
Patentamt

European
Patent Office

Office européen
des brevets

# EUROPEAN SEARCH REPORT

**Application Number**

EP 10 16 6456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/053372 A2 (BYCAST INC [CA]) 8 May 2008 (2008-05-08) * abstract; figure 6 * * paragraphs [0011], [0035] * * paragraph [0076] - paragraph [0077] * * paragraph [0080] * * paragraph [0100] - paragraph [0115] * * paragraph [0130] - paragraph [0132] * ----- | 1-6 | INV. G06F17/30 |
| X | Darryl Chantry ET AL.: "The Architecture Journal" no. 19, 9 April 2009 (2009-04-09), pages 1-41, XP002602108 Retrieved from the Internet: URL:www.architecturejournal.net [retrieved on 2010-09-23] * page 2 - page 9 * ----- | 1-6 | |
| X | David Chappell: "Introducing the azure services platform" October 2008 (2008-10), XP002602109 Retrieved from the Internet: URL:http://download.microsoft.com/download/e/4/3/e43bb484-3b52-4fa8-a9f9-ec60a32954bc/Azure_Services_Platform.pdf [retrieved on 2010-09-23] * the whole document * ----- | 1-6 | TECHNICAL FIELDS SEARCHED (IPC) G06F |
| X | US 7 463 648 B1 (EPPSTEIN CHRISTOPHER M [US] ET AL) 9 December 2008 (2008-12-09) * the whole document * ----- | 1-6 | |

The present search report has been drawn up for all claims

| Place of search | Date of completion of the search | Examiner |
|---|---|---|
| Berlin | 27 September 2010 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 267 616 A1**

## ANNEX TO THE EUROPEAN SEARCH REPORT
## ON EUROPEAN PATENT APPLICATION NO.

EP 10 16 6456

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2010

| Patent document cited in search report | | Publication date | Patent family member(s) | | Publication date |
|---|---|---|---|---|---|
| WO 2008053372 | A2 | 08-05-2008 | US | 2008126404 A1 | 29-05-2008 |
| US 7463648 | B1 | 09-12-2008 | NONE | | |

EPO FORM P0459